(19) Europäisches Patentamt / European Patent Office / Office européen des brevets

(11) **EP 4 283 701 A1**

(12) **EUROPEAN PATENT APPLICATION**
published in accordance with Art. 153(4) EPC

(43) Date of publication:
**29.11.2023 Bulletin 2023/48**

(21) Application number: **21920283.5**

(22) Date of filing: **22.01.2021**

(51) International Patent Classification (IPC):
***H01M 4/13*** (2010.01)

(52) Cooperative Patent Classification (CPC):
**Y02P 70/50**

(86) International application number:
**PCT/CN2021/073261**

(87) International publication number:
**WO 2022/155885 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **LIU, Shengqi
Ningde, Fujian 352100 (CN)**

(74) Representative: **Icosa
83 avenue Denfert-Rochereau
75014 Paris (FR)**

(54) **POLE PIECE, SECONDARY BATTERY, AND ELECTRONIC DEVICE**

(57)    This application provides an electrode plate and a battery. The electrode plate includes: a current collector and an active material layer located on at least one side of the current collector. The active material layer includes a first region and a second region. The active material layer includes active material particles. The electrode plate satisfies a condition expressed by Formula (1): $H_2 < Dv_{99} < H_1$, Formula (1), where $Dv_{99}$ is a diameter of the active material particles corresponding to a point at which a cumulative volume percentage of measured particles reaches 99% of a total volume of all the active material particles in a volume-based particle size distribution curve viewed from a small-diameter side, $H_1$ is a thickness of the first region on a single side, and $H_2$ is a thickness of the second region on a single side of the current collector. The electrode plate and the battery of this application are superior in safety performance and other quality indicators.

FIG. 1

EP 4 283 701 A1

**Description**

**TECHNICAL FIELD**

This application relates to the technical field of batteries, and in particular, to an electrode plate, a secondary battery, and an electronic device.

**BACKGROUND**

In recent years, with the continuous development of technological products such as mobile phones and automobiles, higher requirements are imposed on quality indicators such as energy density of a battery that serves as an important part of such products. In the research and development of high-energy-density batteries, increasing the content of an active material per unit area of an electrode plate in the battery is a relatively direct approach to increasing the energy density of the battery. Currently, the amount of the active material on the electrode plate is increased primarily by increasing the thickness or compaction density of an active material coating on the electrode plate, so as to improve the exertion of the capacity of the active material and in turn increase the energy density of the battery.

However, the increase in the coating area density tends to pose a great pressure on a current collector (or briefly known as collector), destroy the surface of the current collector, reduce strength of the current collector, and consequently, deteriorate performance such as safety of the electrode plate and cause other problems, thereby impairing quality indicators such as safety and discharge capacity of the battery.

**SUMMARY**

This application provides an electrode plate, a secondary battery, and an electronic device, and is superior in safety performance, discharge capacity, and other quality indicators, and can effectively overcome the above defects in the prior art.

According to one aspect of this application, an electrode plate is provided, including: a current collector and an active material layer located on at least one side of the current collector. The active material layer includes a first region and a second region. The active material layer includes active material particles. The electrode plate satisfies a condition expressed by Formula (1): $H_2 < Dv_{99} < H_1$, Formula (1), where $Dv_{99}$ is a diameter of the active material particles corresponding to a point at which a cumulative volume percentage of measured particles reaches 99% of a total volume of all the active material particles in a volume-based particle size distribution curve viewed from a small-diameter side, $H_1$ is a thickness of the first region on a single side, and $H_2$ is a thickness of the second region on a single side of the current collector.

According to some embodiments of this application, the electrode plate includes a jelly-roll electrode plate containing a bent section and a straight section. The bent section and the straight section form a jelly-roll structure. The first region is located in the straight section of the jelly-roll electrode plate, and the second region is located in the bent section of the jelly-roll electrode plate.

According to some embodiments of this application, the second region is located at any position around the first region.

According to some embodiments of this application, the electrode plate is at least one of a cathode or an anode.

According to some embodiments of this application, the $Dv_{99}$ ranges from 10 $\mu$m to 45 $\mu$m.

According to some embodiments of this application, a ratio between an area of the second region and an area of the first region is 0.1 to 0.0001.

According to some embodiments of this application, a ratio between an area density of the second region and an area density of the first region is 0.1 to 0.95.

According to some embodiments of this application, a ratio between a compaction density of the second region and a compaction density of the first region is 0.2 to 1.2.

According to some embodiments of this application, an active material in the second region is different from an active material in the first region.

According to some embodiments of this application, an insulation layer exists on a surface of the second region.

According to some embodiments of this application, a width of the second region in a length direction of the electrode plate is Wi, satisfying: $W_1 \geq 2 \times H_1$. According to some embodiments of this application, the $W_1$ ranges from 0.5 mm to 4 mm.

According to another aspect of this application, a secondary battery is provided, including the electrode plate.

According to some embodiments of this application, the secondary battery further includes an electrolyte solution, and a conductivity of the electrolyte solution is greater than or equal to 7 mS/cm.

According to still another aspect of this application, an electronic device is provided, including the secondary battery.

The special structure design for the electrode plate provided in this application can improve the safety and other performance indicators of the electrode plate, and facilitates the use of the electrode plate. Especially, the electrode plate is applicable to jelly-roll batteries and flexible batteries, and solves the problem that the current collector in the bent section of the electrode plate is prone to be damaged, and the resulting problems such as low safety of the battery and a low discharge capacity. The electrode plate is of high practical significance in industrial applications.

## BRIEF DESCRIPTION OF DRAWINGS

FIG. 1 is a cross-sectional schematic view of an electrode plate sectioned along a direction parallel to a length direction of the electrode plate according to an embodiment of this application;

FIG. 2 is a cross-sectional schematic view of an electrode plate sectioned along a direction parallel to a length direction of the electrode plate according to another embodiment of this application;

FIG. 3 is a schematic plan view of an active material layer of an electrode plate according to an embodiment of this application;

FIG. 4 is a schematic diagram of a jelly-roll structure of an electrode plate according to an embodiment of this application; and

FIG. 5 is a schematic diagram of a jelly-roll structure of a jelly-roll battery according to an embodiment of this application.

List of reference numerals:

1: current collector; 2: active material layer; 21: first region; 22: second region; 221: midline of the second region; 4: separator; 5: cathode; 51: positive tab; 6: anode; 61: negative tab; 7: negative current collector; Hi: thickness of the first region on a single side; $H_2$: thickness of the second region on a single side; $W_1$: width of the second region in a length direction of the electrode plate.

## DETAILED DESCRIPTION OF EMBODIMENTS

To enable a person skilled in the art to better understand the technical solutions of this application, the following describes this application in more detail with reference to accompanying drawings.

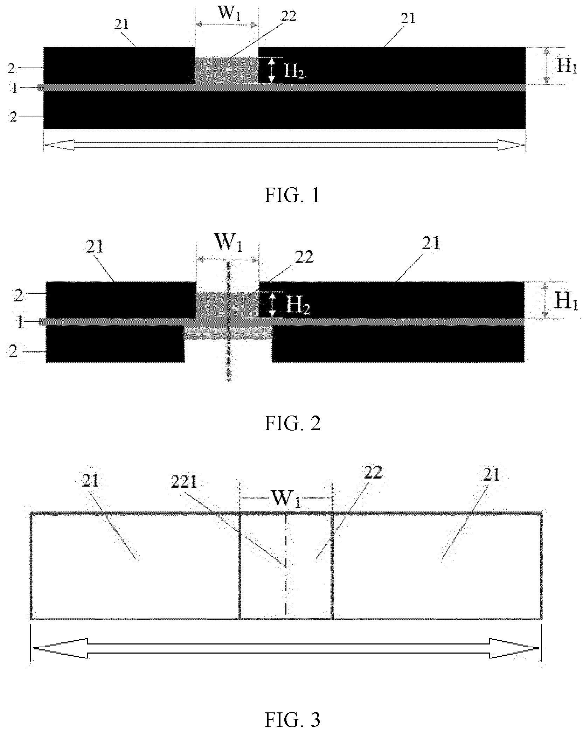

According to one aspect of this application, an electrode plate is provided. As shown in FIG. 1 to FIG. 4, the electrode plate includes: a current collector 1 and an active material layer 2 located on at least one side of the current collector 1. The active material layer 2 includes a first region 21 and a second region 22. The active material layer 2 includes active material particles. The electrode plate satisfies a condition expressed by Formula (1): $H_2 < Dv_{99} < H_1$ Formula (1), where $Dv_{99}$ is a diameter of the active material particles corresponding to a point at which a cumulative volume percentage of measured particles reaches 99% of a total volume of all the active material particles in a volume-based particle size distribution curve viewed from a small-diameter side, $H_1$ is a thickness of the first region 21 on a single side, and $H_2$ is a thickness of the second region 22 on a single side of the current collector.

The electrode plate provided in this application can alleviate the pressure caused by the active material layer onto the current collector, avoid the risk of the fracture of the current collector, effectively improve the safety of the electrode plate, and at the same time, ensure other performance indicators such as energy density of the electrode plate to be satisfactory, thereby improving the cycle performance, safety, stability, lifespan, and other quality indicators of the battery. If $Dv_{99}$ is overly low, the compaction density of the active material layer is overly high and prone to damage the current collector, and impairs the strength of the current collector as well as the safety and other performance indicators of the electrode plate. If $Dv_{99}$ is overly high, abnormal phenomena such as scratches and bumps are prone to occur on the surface of the electrode plate, thereby also impairing the performance of the electrode plate. Therefore, controlling the satisfaction of $H_2 < Dv_{99} < H_1$ can effectively improve the overall safety, stability, energy density and other performance indicators of the electrode plate.

The $H_1$ is a thickness of the first region on a single side of the current collector, and $H_2$ is a thickness of the second region on a single side of the current collector. Using the second region as an example, when the second region contains the active material layer alone, $H_2$ is the thickness of the active material layer in the second region. When the coating in the second region is a combination of the active material layer and other coatings (such as the insulation layer), $H_2$ is a sum of the thickness of the active material layer and the thickness of the insulation layer in the second region.

In some embodiments, the electrode plate may include a jelly-roll electrode plate containing a bent section (or referred to as a bend portion, bent portion, fold position, fold region, or the like) and a straight section. The bent section and the straight section form a jelly-roll structure. The first region 21 may be specifically located in the straight section of the jelly-roll electrode plate, and the second region 22 is located in the bent section of the jelly-roll electrode plate. The straight section may all be the first region (that is, the first region is a straight section). The midline of the second region 22 may coincide with the midline of the bent section. The midline of the second region 22 means an imaginary line parallel to the width direction of the electrode plate and bisecting the second region 22. The midline of the bent section means an imaginary line parallel to the width direction of the electrode plate and bisecting the bent section. For example, the bent section may all be the second region (that is, the second region is a bent section).

In some embodiments, the jelly-roll electrode plate may include a plurality of bent sections, and the second region may be located in one of the bent sections, or, the second region may be located/distributed in a part or all of the plurality of bent sections.

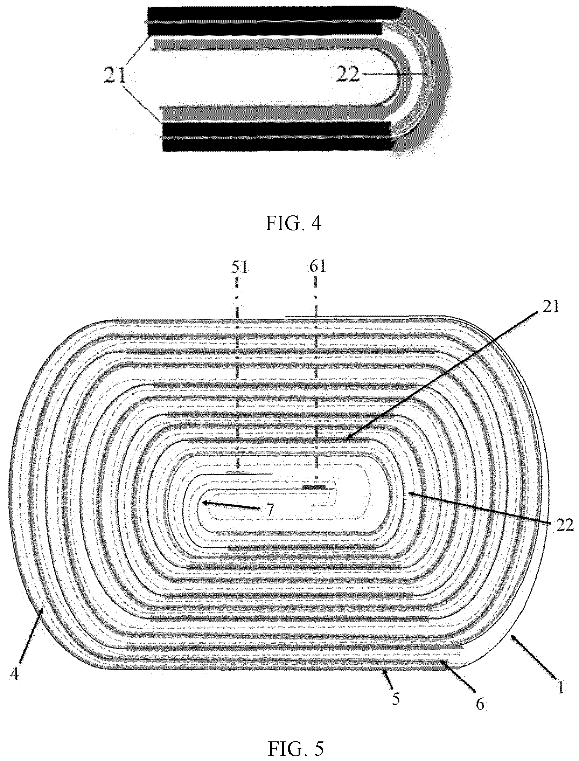

The electrode plate of this application may be applied to conventional batteries as required. For example, the electrode plate is applied to a jelly-roll battery, a flexible battery, or the like. When the electrode plate is applied to such batteries, the electrode plate usually needs to include a bent section and a straight section that are configured to form the jelly-roll structure. After the electrode plate forms the jelly-roll structure, the current collector in the bent section is more prone to fracture, thereby impairing the safety, charge capacity, discharge capacity, and other performance indicators of the battery. The electrode plate of this application can effectively solve such problems. For example, as shown in FIG. 4, after the electrode plate forms the bent structure, the first region 21 is a straight section, and the second region 22 is a bent section. In this way, not only the damage caused by the cold-pressing process of the electrode plate to the current collector in the bent section can be reduced, but also the bending radius for bending (or folding) the electrode plate can be reduced. This reduces the stress on the current collector in the second region, reduces the damage caused to the current collector during the preparation or use of the electrode plate, and in turn, improves the safety and other performance indicators of the electrode plate.

In some embodiments, the width of the second region 22 in the length direction of the electrode plate is Wi, and the width satisfies $W_1 \geq 2 \times H_1$, thereby being conducive to the safety and use of the electrode plate. For example, when the electrode plate forms a jelly-roll (or bent, curved, folded, or the like) structure, the width of the bent section is at least not less than the sum of the thicknesses of the straight sections on two sides of the bent section. Therefore, by controlling the width to satisfy $W_1 \geq 2 \times H_1$, controlling the positioning of the second region 22 in the bent section, and controlling the positioning of the first region in the straight section, this application facilitates the formation of a jelly-roll structure of the electrode plate and reduces the risk of fracture of the current collector in the bent section. In some embodiments, after the electrode plate forms a jelly-roll structure, the bent section of the electrode plate is generally similar to a semicircle. The radius of the semicircle is not less than the thickness of the straight section. That is, the width $W_1$ of the bent section is not less than an arc length of a semicircle formed by using the thickness of the straight section as a radius. Controlling the width to satisfy $W_1 \geq \pi \times H_1$ is more conducive to relieving the pressure on the current collector in the bent section, reducing the risk of fracture of the current collector in the bent section, and improving the safety and other performance indicators of the electrode plate.

In this application, the length direction of the electrode plate is indicated by the bidirectional arrow in FIG. 1 and FIG. 3. The width direction of the electrode plate is perpendicular to the length direction of the electrode plate. Both the length direction of the electrode plate and the width direction of the electrode plate are parallel to a plane coinciding with the surface of the electrode plate.

In some embodiments, $W_1$ ranges from 0.5 mm to 4 mm, for example, may be 0.8 mm, 1 mm, 1.5 mm, 2 mm, 2.5 mm, 3 mm, 3.5 mm, or a value falling within a range formed by any two thereof. In contrast, the $W_1$ being less than 0.5 mm will increase the difficulty of manufacturing the electrode plate. Especially, the functional film layer (that is, active material layer) is elongated during the cold-pressing, thereby being adverse to controlling the structure of the second region 22 and reducing the effects of improving the safety and other performance indicators of the electrode plate. The $W_1$ being greater than 4 mm leads to a considerable waste of the energy density of the electrode plate. Therefore, controlling the width to satisfy 0.5 mm $\leq W_1 \leq$ 4 mm is more conducive to ensuring a desirable level of both safety and other performance indicators such as energy density of the electrode plate.

The second region 22 may be located at any position around the first region 21. For example, the second region 22 may be located on at least one side of the first region 21 (as shown in FIG. 1 and FIG.2). In some embodiments, a plurality of second regions 22 may exist. Every two of the plurality of second regions 22 are separated by the first region 21. For example, two second regions 22 exist, and the two second regions 22 are located on two sides of the first region 21 respectively. For example, three second regions 22 exist, and the three second regions 22 are separated from each other by two first regions 21, that is, the first second region 22 is separated from the second region 22 by one first region 21, and the other second region 22 is separated from the third second region 22 by the other first region 21. The number of second regions may be set as required. For example, the number of a plurality of second regions 22 may be equal to the number of bent sections of the jelly-roll electrode plate. Each bent section includes a second region 22.

The above electrode plate may be at least one of a cathode (or referred to as positive electrode plate, cathode electrode plate, or the like) or an anode (or referred to as negative electrode plate, anode electrode plate, or the like).

When the electrode plate is a positive electrode plate, the active material particles may include conventional positive active material particles in this field, such as lithium-containing active material particles. For example, the active material particle may include at least one of lithium cobalt oxide (LCO), lithium iron phosphate (LFP), lithium manganese oxide, a nickel-cobalt-manganese (NCM) ternary material, or a nickel-cobalt-aluminum (NCA) ternary material. The current collector may be a conventional positive current collector in this field such as aluminum foil. When the electrode plate is a negative electrode plate, the active material particles may include conventional negative active material particles in this field, such as particles of graphite, mesocarbon microbeads (MCMB), hard carbon, soft carbon, silicon, or silicon-carbon composite (or referred to as silicon-carbon compound). Specifically, the graphite may include artificial graphite and/or natural graphite. The current collector may be a conventional negative current collector in this field such as copper foil.

In some embodiments, the thickness of the current collector 1 may generally be 4 to 20 $\mu$m, so that the current collector can fit the active material layer of the specified structural design to improve the overall safety and other performance indicators of the electrode plate.

The active material layer further includes a binder and a conductive agent. The binder can improve the bonding between the active material particles, and improve the bonding between the active material layer and the current collector. For example, the binder includes but is not limited to at least one of: polyvinylidene difluoride (PVDF), polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber (SBR), acrylated (acrylic) styrene-butadiene rubber, epoxy resin, or nylon. The conductive agent may include, but is not limited to, at least one of conductive carbon black (SP), acetylene black, Ketjen black, carbon fibers, or the like.

Generally, the $Dv_{99}$ may range from 10 $\mu$m to 45 $\mu$m, for example, may be 10 $\mu$m, 15 $\mu$m, 20 $\mu$m, 25 $\mu$m, 30 $\mu$m, 35 $\mu$m, 40, or a value falling within a range formed by any two thereof. Relatively speaking, if $Dv_{99}$ is greater than 45 $\mu$m, the solid-phase diffusion resistance of ions (such as lithium ions) is great, resulting in poor kinetic performance of a battery cell that employs such an electrode plate. If $Dv_{99}$ is less than 10 $\mu$m, the particle size of the active material particles is relatively small, the reaction area between the active material particles and the electrolyte solution is relatively large, resulting in more side reactions of the battery cell that employs such an electrode plate, and in turn, impairing the high-temperature storage performance and high-temperature cycle performance of the battery.

Further, $H_1$ is generally not less than 50 $\mu$m, and, for example, may range from 50 $\mu$m to 100 $\mu$m, such as 50 $\mu$m, 55 $\mu$m, 60 $\mu$m, 70 $\mu$m, 75 $\mu$m, 80 $\mu$m, 85 $\mu$m, 90 $\mu$m, 95 $\mu$m, 100 $\mu$m, or a value falling within a range formed by any two thereof, thereby being conducive to improving the cycle performance, safety, and other performance indicators of the electrode plate comprehensively. $H_2$ is less than 45 $\mu$m, and specifically, may be not greater than 40 $\mu$m, such as 10 $\mu$m to 40 $\mu$m, specifically 10 $\mu$m, 15 $\mu$m, 20 $\mu$m, 25 $\mu$m, 30 $\mu$m, 35 $\mu$m, 40 $\mu$m, or a value falling within a range formed by any two thereof. In this application, the thickness on a single side means an average thickness of the active material layer on a single side (or a single surface) of the current collector, rather than the sum of the thicknesses of the active material layers on both sides (or both surfaces) of the current collector, and rather than the overall thickness of the electrode plate.

In this application, the area of the second region 22 may be less than the area of the first region 21. In some embodiments, a ratio between an area of the second region 22 and an area of the first region 21 may be 0.1 to 0.0001 (that is, the area of the second region is 0.1 to 0.0001 times the area of the first region). For example, the area ratio may be 0.1, 0.05, 0.01, 0.005, 0.001, 0.0005, 0.0001, or a value falling within a range formed by any two thereof, thereby improving the safety, energy density, and other performance indicators of the electrode plate. When a plurality of second regions 22 exist on the electrode plate, the area ratio is a ratio of the area of a single second region 22 to the total area of the first regions 21 on the electrode plate.

In this application, the area density (that is, the mass per unit area, or referred to as areal density) of the second region 22 may be less than the area density of the first region 21, thereby further improving the energy density, safety, and other performance indicators of the electrode plate comprehensively. In some embodiments, the area density ratio between the second region 22 and the first region 21 may be 0.1 to 0.95 (that is, the area density of the second region 22 is 0.1 to 0.95 times the area density of the first region 21). For example, the area density ratio may be 0.1, 0.2, 0.3, 0.4, 0.5, 0.6, 0.7, 0.8, 0.9, 0.95, or a value falling within a range formed by any two thereof. The area density of the first region 21 may be 200 g/m$^2$ to 650 g/m$^2$, such as 200 g/m$^2$, 250 g/m$^2$, 300 g/m$^2$, 350 g/m$^2$, 400 g/m$^2$, 450 g/m$^2$, 500 g/m$^2$, 550 g/m$^2$, 600 g/m$^2$, 650 g/m$^2$, or a value falling within a range formed by any two thereof. The area density of the second region 22 may be 20 g/m$^2$ to 190 g/m$^2$, such as 20 g/m$^2$, 50 g/m$^2$, 80 g/m$^2$, 100 g/m$^2$, 120 g/m$^2$, 150 g/m$^2$, 170 g/m$^2$, 190 g/m$^2$, or a value falling within a range formed by any two thereof.

In this application, the compaction density (that is, the mass per unit volume) of the second region 22 may be less than the compaction density of the first region 21, thereby further alleviating the damage caused by the active material layer to the current collector at the second region 22. For example, when the electrode plate forms a jelly-roll (or, in other words, bent, curved, folded) structure, the second region 22 is located in the bent section that forms the jelly-roll structure, thereby effectively reducing the risk of fracture of the current collector in the bent section and improving the safety and other performance indicators of the electrode plate. In some embodiments, the compaction density ratio between the second region 22 and the first region 21 may be 0.2 to 1.2, for example, 0.2, 0.3, 0.4, 0.5, 0.6, 0.7, 0.8, 0.9, 1, 1.1, 1.2, or a value falling within a range formed by any two thereof. The compaction density of the first region 21 may be 2.6 g/cc to 4.4 g/cc, for example, 2.6 g/cc, 3 g/cc, 3.5 g/cc, 4 g/cc, 4.4 g/cc, or a value falling within a range formed by any two thereof. The compaction density of the second region 22 may be 2.1 g/cc to 4.3 g/cc, and preferably 2.2 g/cc to 4.2 g/cc, for example, 2.2 g/cc, 2.5 g/cc, 2.8 g/cc, 3 g/cc, 3.2 g/cc, 3.5 g/cc, 3.8 g/cc, 4 g/cc, 4.2 g/cc, or a value falling within a range formed by any two thereof.

In this application, the active material particles may include a first active material and a second active material. The active material in the second region is different from the active material in the first region. Specifically, the active material in the second region is different from the active material in the first region, and the difference lies in at least one of the type of the raw material of the active material or the particle size of the active material compared between the second region and the first region. In other words, the active material in the second region may be one of the first active material or the second active material, the active material in the first region may be the other of the first active material or the second active material. The raw material type and/or particle size, and preferably the raw material type, differs between the first active material and the second active material. During specific implementation, the active material in the first region and the second region may be selected as required, so as to further improve the safety and other performance indicators of the electrode plate. For example, when the electrode plate is a jelly-roll electrode plate, the second region is located in the bent section of the jelly-roll electrode plate, and the first region is located in the straight section of the jelly-roll electrode plate. The current collector in the bent section is more prone to be damaged. According to the characteristics of different active materials, the selected active material in the second region may be caused to be less destructive to the current collector, and the energy density and other performance indicators of the electrode plate may be improved by the active material in the first region.

In some embodiments, an insulation layer (or insulation material layer) exists on the surface of the second region 22, thereby further improving the safety and other performance indicators of the electrode plate. The insulation layer may be a conventional insulation coating in this field. For example, the insulation layer may include a binder and inorganic particles. Based on the total mass of the insulation layer, the mass percent of the binder is 2 wt% to 50 wt%, and the remaining mass is contributed by the inorganic particles (that is, the mass percent of the inorganic particles is 50 wt% to 98 wt%). By controlling the mass percentages of the binder and the inorganic particles to fall within such ranges, this application improves the bonding force between the insulation layer and the surface of the second region. For example, the binder may include at least one of polyvinylidene difluoride (PVDF), polypropylene, polyacrylate, acrylonitrile copolymer, or carboxymethyl cellulose salt. The added binder can improve adhesive properties of the insulation layer, thereby increasing the bonding force between the insulation layer and the surface of the second region. The inorganic particles may include at least one of boehmite, diaspore, or alumina. The added inorganic particles can improve the strength and insulating properties of the insulation layer.

In some embodiments, the second region may include an active material layer and an insulation layer existent on the surface of the active material layer, or, the entire second region is the insulation layer. The thickness of the insulation layer is generally less than 45 $\mu$m, specifically not more than 40 $\mu$m, such as 0.02 $\mu$m to 30 $\mu$m, and preferably 0.02 $\mu$m to 10 $\mu$m. By controlling the thickness of the insulation layer to fall within the above range, the insulation layer is caused to be superior in strength and insulating properties.

The insulation layer may be disposed at any position on the surface of the second region 22. For example, the insulation layer may cover a part or all of the surface of the second region 22. Generally, the coverage of the insulation layer on the surface of the second region is not lower than 90%, thereby improving the insulating properties of the electrode plate, and improving the safety, cycle performance, and other performance indicators of the electrode plate. In this application, one side (referred to as a first side) of the current collector 1 is coated with an active material layer that includes a first region 21 and a second region 22. The other side (referred to as a second side) of the current collector may be coated with an active material layer or a blank foil region without an active material layer. Preferably, the second side of the current collector is coated with an active material layer, thereby improving the energy density and other performance indicators of the electrode plate. When the second side of the current collector 1 is coated with an active material layer 2, the active material layer 2 may be an active material layer that does not include the second region (for example, the entire active material layer is the first region 21, as shown in FIG. 1), or, may be an active material layer 2 that includes a second region 22 and a first region 21 (as shown in FIG. 2). When the active material layer 2 on the second side includes the second region 22 and the first region 21, the parameters such as single-side thickness, area density, and compaction density may be identical or different between the second region 22 on the second side and the second region 22 on the first side, and the area of the second region on the second side may be identical to or different from the second region on the first side. However, preferably, the midline 221 of the second region 22 on the second side coincides with the midline of the second region 22 on the first side. The midline means an imaginary line (as shown in FIG. 3) parallel to the width direction of the electrode plate and bisecting the second region 22. In other words, in the cross-sectional view of the electrode plate in FIG. 2, the second regions 21 on two sides of the current collector each are axisymmetric with respect to the dashed line in FIG. 2, thereby being more conducive to preparing and using the electrode plate, solving the problems such as the current collector being prone to be damaged, and reducing the complexity of controlling the manufacturing process of the electrode plate.

Understandably, the midline, imaginary line, and dashed line in this application are intended for more conveniently characterizing the relative positional relationship of the structures such as the second region, and for illustrating and explaining the technical solutions more clearly, and are all imaginary lines rather than physical lines.

The active material layer 2 and the active material particles exert a pressure on the current collector 1, thereby affecting the roughness of the surface of the current collector 1. If the difference between the roughness of the current collector 1 in the first region 21 and the roughness of the current collector 1 in the second region 22 is larger, it indicates that the current collector 1 in the second region 22 is less damaged. Generally, the roughness of the current collector 1 in the first region 21 is $R_1$, the roughness of the current collector 1 in the second region 22 is $R_2$, and the roughness satisfies: $R_1 - R_2 \geq 500$ mm$^{-1}$, and preferably, $R_1 - R_2 \geq 1000$ mm$^{-1}$. The roughness of the current collector 1 may be measured by a conventional method in this field. Generally, the coating such as the active material layer on the surface of the electrode plate is removed first, and then the roughness of each part is measured with a roughness tester.

The electrode plate of this application may be prepared by a conventional method in this field. For example, in some embodiments, a process of preparing the electrode plate may include: applying a slurry containing the raw material of an active material layer onto a current collector, and performing drying and cold-pressing to obtain an electrode plate, in which the particle size is controlled to satisfy $H_2 < Dv_{99} < H_1$.

In specific implementation, after the above slurry is applied onto the current collector, the slurry is pressed by a hold-down bar onto a preset position of the second region. After completion of drying, the hold-down bar is removed, and then the current collector is cold-pressed to obtain an electrode plate. The hold-down bar of a specified structure may be selected based on the size of the preset region and preset thickness of the second region. Generally, the width of the hold-down bar is equal to the width of the second region, the length of the hold-down bar is equal to the length of the second region, the thickness of the hold-down bar is equal to a difference between a single-side thickness of the second region and a single-side thickness of the first region, and the number of the hold-down bars is equal to the number of the second regions. In this process, the hold-down bar presses down on the position at which the second region is to be formed, thereby reducing the coating thickness at this position, relieving the pressure and damage to the current collector during the cold-pressing, and improving the safety and other performance indicators of the prepared electrode plate. During the specific operation, the raw materials of the active material layer may be added in a conventional solvent in this field such as N-methyl-pyrrolidone (NMP) and water, and dispersed uniformly to form the slurry. The steps such as drying and cold-pressing mentioned above may be conventional steps in this field, and are not particularly limited herein, details of which are omitted herein.

According to another aspect of this application, a secondary battery is provided, including the electrode plate.

The electrode plate may be a positive electrode plate or a negative electrode plate, or may include a positive electrode plate and a negative electrode plate. When the electrode plate is a positive electrode plate, the secondary battery further includes a negative electrode plate. The negative electrode plate may be a conventional negative electrode plate in this field, such as a graphite-containing negative electrode plate, a silicon-containing negative electrode plate. When the electrode plate is a negative electrode plate, the secondary battery further includes a positive electrode plate. The positive electrode plate may be a conventional positive electrode plate in this field, without being particularly limited in this application.

The secondary battery further includes a separator located between the positive electrode plate and the negative electrode plate. The separator is configured to separate the positive electrode plate from the negative electrode plate, and may be a conventional separator in this field, without being particularly limited in this application.

The secondary battery further includes an electrolyte solution. The conductivity of the electrolyte solution is greater than or equal to 7 mS/cm, thereby facilitating rapid movement of ions (such as lithium ions), and improving the rapid charge and discharge capabilities of the battery. Especially, the electrolyte solution can overcome the problems such as a large ion diffusion resistance caused by a thick electrode (containing a relatively thick active material layer), so that the battery achieves both a high energy density and fast-charge and fast-discharge capabilities concurrently.

In some embodiments, the electrolyte solution may include a lithium and a nonaqueous solvent. The concentration of the lithium salt in the electrolyte solution may generally be 0.7 mol/L to 1.4 mol/L.

For example, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. The nonaqueous solvent may be a carbonate compound, a carboxylate compound, an ether compound, another organic solvent, or a combination thereof. The carbonate compound may be a chain carbonate compound, a cyclic carbonate compound, a fluorocarbonate compound, or a combination thereof. Examples of the chain carbonate compound are dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. Examples of the cyclic carbonate compound are ethylene carbonate (EC), propylene carbonate (PC), butylene carbonate (BC), vinyl ethylene carbonate (VEC), or a combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof. Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or a combination thereof. Examples of the ether compound are dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof. Examples of other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

The secondary battery of this application may be a lithium-ion battery, such as a jelly-roll lithium-ion battery, a flexible lithium-ion battery, or the like. In some embodiments, the secondary battery is a jelly-roll battery, and the electrode plate is a positive electrode plate. As shown in FIG. 6, the jelly-roll battery includes a cathode (Cathode) 5, an anode (Anode) 6, and a separator (Separator) 4 located between the cathode 5 and the anode 6. The cathode, the anode, and the separator form a jelly-roll structure. The cathode 5 includes a positive current collector 1 and an active material layer 2 located on two sides of the positive current collector 1. The active material layer 2 includes a first region 21 and a second region 22. A positive tab 51 is disposed at one end of the positive current collector 1, the end being located inside the jelly-roll structure. The anode 5 includes a negative current collector 7 and a negative active layer located on the negative current collector 7. A negative tab 61 is disposed at one end of the negative current collector 7, the end being located inside the jelly-roll structure. The positive tab may be an aluminum tab, and the positive current collector may be an aluminum foil (Al foil). The negative tab may be a nickel tab, and the negative current collector may be a copper foil (Cu foil).

The secondary battery may be manufactured according to a conventional method in this field. For example, the positive electrode plate, the separator, and the negative electrode plate may be stacked and wound to form a bare cell. The bare cell is subjected to packaging, electrolyte injection, and left to stand to obtain a battery cell to be infiltrated. The battery cell is subjected to chemical formation and capacity grading, so that an SEI film is formed on the surface of the negative electrode (or referred to as the surface of the anode), thereby activating the battery, making the battery enter a charged state, and obtaining a secondary battery. Such steps/processes may be conventional operations in this field, details of which are omitted here.

According to still another aspect of this application, an electronic device is further provided, including the secondary battery.

To make the objectives, technical solutions, and advantages of this application clearer, the following gives a clear and comprehensive description of the technical solutions of this application with reference to embodiments of this application. Evidently, the described embodiments are merely a part of but not all of the embodiments of this application. All other embodiments derived by a person of ordinary skill in the art based on the embodiments of the present invention without making any creative efforts fall within the protection scope of the present invention.

**Embodiment 1**

In this embodiment, an electrode plate that includes a first region and a second region is a positive electrode plate. The positive electrode plate includes: a positive current collector 1 and an active material layer 2 located on two sides of the positive current collector 1. The active material layer 2 includes a first region 21 and a second region 22. The electrode plate satisfies a condition expressed by Formula (1): $H_2 < Dv_{99} < H_1$ Formula (1), where $Dv_{99}$ is a diameter of the active material particles corresponding to a point at which a cumulative volume percentage of measured particles reaches 99% of a total volume of all the active material particles in a volume-based particle size distribution curve viewed from a small-diameter side, $H_1$ is a thickness of the first region on a single side, and $H_2$ is a thickness of the second region on a single side of the current collector.

The coating in the second region is an active material layer. $H_1 = 75$ μm, $H_2 = 40$ μm, $Dv_{99} = 42$ μm. The area density of the first region is 311 g/m$^2$, and the area density of the second region is 152 g/m$^2$. The compaction density of the first region is 4.15 g/cc, and the compaction density of the second region is 3.8 g/cc. The ratio of the area of a single second region 22 to the total area of the first regions 21 on the electrode plate is 0.001. The width of the second region in the length direction of the positive electrode plate is $W_1 = 1$ mm, and the positive current collector 1 is an aluminum foil with a thickness of 10 μm.

The secondary battery of this embodiment includes the positive electrode plate. The positive electrode plate and the secondary battery are specifically prepared according to the following process:

(1) Preparing a positive electrode plate

Putting lithium cobalt oxide (LCO), polyvinylidene difluoride, and conductive carbon black in an NMP solvent at a mass ratio of 97: 1.5: 1.5, stirring and mixing well to form a positive slurry, applying the positive slurry onto two surfaces of the positive current collector. Letting a 2 mm-wide hold-down bar (the length of the hold-down bar is the same as the length of the formed active material layer) hold down on positions at which the second region is to be formed on the two surfaces, and then performing drying. Removing the hold-down bar, and performing cold-pressing to obtain a positive electrode plate.

(2) Preparing a negative electrode plate

Putting artificial graphite, styrene-butadiene rubber, and sodium carboxymethyl cellulose (CMC, a thickener) in deionized water at a mass ratio of 97.4: 1.2: 1.4, and stirring and mixing well to form a negative slurry. Applying the negative slurry onto a negative current collector (copper foil) that is pre-coated with a primer, and drying and cold-calendering the current collector, and performing operations such as drying and cold-pressing to obtain a negative electrode plate.
(3) Preparing a secondary battery: Stacking the negative electrode plate, the separator, and the positive electrode plate together, and winding the stacked structure to form a bare cell. Packaging the bare cell, filling the package with an electrolyte solution, and leaving the cell to stand for a specified period to obtain a fully infiltrated battery cell. Subsequently, performing chemical formation and capacity grading to obtain a jell-roll lithium-ion battery (soft pouch battery). The electrolyte solution is formed of DMC, MEC, EC, DEC, and $LiPF_6$. The mass ratio between DMC, MEC, EC, and DEC is 1: 1: 1: 1. The concentration of $LiPF_6$ in the electrolyte solution is 1 mol/L. The conductivity of the electrolyte solution is 11 S/cm.
Performing operations with reference to the preparation process in Embodiment 1 to obtain the electrode plates and the secondary batteries of Embodiments 2 to 16. The differences are described below:

(1) Embodiments 2 to 7 and Embodiments 12, 14, and 16 differ from Embodiment 1 as shown in Table 1. The conditions are the same as those in Embodiment 1 except the differences set out in Table 1.
(2) Embodiment 8 and Embodiment 13 differ from Embodiment 1 in that the coating in the second region is an insulation material layer, and the insulation material layer is formed of polyvinylidene fluoride and boehmite (the mass ratio between the polyvinylidene fluoride and boehmite is 90: 10). Other different conditions are shown in Table 1. All conditions are the same as those in Embodiment 1 except such differences.
(3) Embodiment 9 differs from Embodiment 1 in that the second region is formed of an active material layer and an insulation material layer located on the surface of the active material layer; the insulation material layer is formed of polyvinylidene fluoride and boehmite (the mass ratio between the polyvinylidene fluoride and boehmite is 10: 90); and the thickness of the insulation material layer is 30 $\mu$m. Other different conditions are shown in Table 1. All conditions are the same as those in Embodiment 1 except such differences.
(4) Embodiment 10 differs from Embodiment 1 in that the active material in the second region is LFP. Other different conditions are shown in Table 1. All conditions are the same as those in Embodiment 1 except such differences.
(5) Embodiments 11 and 15 differ from Embodiment 1 in that the electrode plate containing a first region and a second region is an anode, and the entire surface of the positive current collector of the cathode is the first region described in Embodiment 1. Other different conditions are shown in Table 1. All conditions are the same as those in Embodiment 1 except such differences.
(6) Comparative Embodiment 1 differs from Embodiment 2 in that the cathode includes no second region, and the parameters such as the thickness (Hi), $Dv_{99}$, area density, compaction density, and active material of the positive active material layer are different as shown in Table 1. All conditions are the same as those in Embodiment 2 except the differences set out in Table 1.
(7) Comparative Embodiment 2 differs from Embodiment 11 in that the anode includes no second region, and the parameters such as the thickness ($H_1$), $Dv_{99}$, area density, compaction density, and active material of the negative active material layer are different as shown in Table 1. All conditions are the same as those in Embodiment 11 except the differences set out in Table 1.

Performing the following processes to carry out a performance test on the electrode plates with a first region and a second region, and the batteries provided in different embodiments.

(1) Measuring the roughness (Ri, $R_2$) of the positive current collector according to the following process: Soaking the positive electrode plate in an NMP solvent for 10 minutes; scraping off the active material layer on the surface of the positive current collector by use of a scraper; rinsing the surface of the positive current collector by use of a clean NMP solvent to make the surface free of foreign matters; drying the positive current collector in an oven at 80 °C, and measuring the roughness Ri of the current collector in the first region and the roughness $R_2$ of the current collector in the second region by use of a Japan Mitutoyo SJ-210 roughness tester to obtain the $R_1$-$R_2$ results shown in Table 2.

(2) Determining the 1 C discharge capacity of the battery (tested at 25 °C) according to the following method: Leaving the battery to stand for 5 minutes; discharging the battery at a constant current of 0.2 C until the voltage reaches 3 V; leaving the battery to stand for 5 minutes; charging the battery at a constant current of 0.5 C until the SOC reaches 100%, and then charging the battery at a constant voltage until the current reaches 0.025 C; leaving the battery to stand for 5 minutes; discharging the battery at a constant current of 1 C until the SOC reaches 0%; leaving the battery to stand for 5 minutes; and recording the 1 C discharge capacity and obtaining the 1 C rate as shown in Table 2.

(3) Performing the following method to carry out a nail penetration test on the battery cell: Leaving the battery cell to stand for 5 minutes at a room temperature (25 ± 3 °C), charging the battery at a constant current of 0.5 C until the voltage reaches 4.48 V, and then charging the battery at a constant voltage until the current reaches 100 mA, during which the test voltage (OCV) is held not less than 4.43 V, and, if the test voltage goes beyond such a range, the voltage is supplemented. Performing a nail penetration test on the battery cell by use of a steel nail (cement nail) with a diameter of 2.5 mm, during which the nail penetration speed is 30 mm/s, the nail penetration depth is 25 mm, and the nail penetration position is 3 mm distant from the lateral edge of the anode of the battery cell and is at the center between the upper edge and the lower edge. Recording the OCV and the cell surface temperature during the nail penetration process. Holding the test for 3 minutes at sampling intervals of 10 ms. Recording the test result as pass if the battery cell is free from fire and explosion. Performing the above nail penetration test process for 10 battery cells prepared in each embodiment, and recording the nail penetration test pass rate of the battery cells in each embodiment ($x_1$/10, $x_1$ is the number of battery cells passing the test), as set out in Table 2.

(4) Performing the following method to carry out a compression test on the battery cell: Before the test, charging the battery cell until the SOC reaches 100% (first, charging the battery at a constant current of 0.5 C until the voltage reaches 4.45 V, and then charging the battery at a constant voltage until the current reaches 0.05 C), during which the test voltage (OCV) is held not less than 4.4 V, and, if the test voltage goes beyond such a range, the voltage is supplemented. Before the test, checking the appearance and taking a photo of the battery cell. Using a new compression test instrument to carry out the compression test. During the test, using a recording instrument to take samples at a precision of 10 ms. Letting a round rod of $\varphi 15.8 \pm 0.1$ mm in diameter and at least 6 cm in length be perpendicular to the tab position of the battery cell, applying a $9.1 \pm 0.1$ kg heavy hammer, and letting the hammer fall in a vertical free state at a point located $61 \pm 2.5$ cm distant from an intersection between the round rod and the battery cell. Continuing the test on the battery cell sample to obtain 2-minute test data, and then ending the test (if the cell fails, continuing the test to obtain 1-minute test data, and then ending the test). Lifting the heavy hammer after completion of the battery cell test. Taking a photo to record the detachment status of each battery cell struck by the heavy hammer. Recording the test result as pass if the battery cell is free from fire and explosion. Performing the above compression test process for 10 battery cells prepared in each embodiment, and recording the compression test pass rate of the battery cells in each embodiment ($x_2$/10, $x_2$ is the number of battery cells passing the test), as set out in Table 2.

**Table 1**

| Embodiment | $H_1$ (μm) | $H_2$ (μm) | $Dv_{99}$ | Area ratio between second region and first region | Area density of first region (g/m²) | Area density of second region (g/m²) | Area density ratio between second region and first region | Compaction density of first region (g/cc) | Compaction density of second region (g/cc) | Compaction density ratio between second region and first region | $W_1$ (mm) | Active material in first region | Coating in second region (coating particles) | Conductivity of electrolyte solution (S/cm) | Electrode plate |
|---|---|---|---|---|---|---|---|---|---|---|---|---|---|---|---|
| Embodiment 1 | 75 | 40 | 42 | 0.001 | 311 | 152 | 0.49 | 4.15 | 3.8 | 0.92 | 1 | LCO | Active material layer (LCO) | 11 | Positive electrode |
| Embodiment 2 | 53 | 30 | 35 | 0.1 | 340 | 190 | 0.56 | 4.165 | 4.1119 | 0.99 | 0.5 | LCO | Active material layer (LCO) | 10 | Positive electrode |
| Embodiment 3 | 53 | 30 | 35 | 0.1 | 340 | 160 | 0.47 | 4.165 | 3.4626 | 0.83 | 1.5 | LCO | Active material layer (LCO) | 11 | Positive electrode |
| Embodiment 4 | 53 | 30 | 35 | 0.1 | 340 | 170 | 0.5 | 4.165 | 3.6791 | 0.88 | 1 | LCO | Active material layer (LCO) | 12 | Positive electrode |
| Embodiment 5 | 53 | 30 | 35 | 0.01 | 340 | 165 | 0.49 | 4.165 | 3.5708 | 0.86 | 3.5 | LCO | Active material layer (LCO) | 10 | Positive electrode |
| Embodiment 6 | 53 | 30 | 35 | 0.001 | 320 | 195 | 0.61 | 3.92 | 4.2201 | 1.08 | 1 | LCO | Active material layer (LCO) | 10 | Positive electrode |
| Embodiment 7 | 53 | 30 | 35 | 0.0001 | 330 | 173 | 0.52 | 4.042 | 3.744 | 0.93 | 1 | LCO | Active material layer (LCO) | 12 | Positive electrode |
| Embodiment 8 | 53 | 30 | 35 | 0.1 | 340 | 40 | 0.12 | 4.165 | 0.8657 | 0.21 | 1 | LCO | Insulation material layer (LCO) | 10 | Positive electrode |

| Embodiment | $H_1$ (μm) | $H_2$ (μm) | $Dv_{99}$ | Area ratio between second region and first region | Area density of first region (g/m²) | Area density of second region (g/m²) | Area density ratio between second region and first region | Compaction density of first region (g/cc) | Compaction density of second region (g/cc) | Compaction density ratio between second region and first region | $W_1$ (mm) | Active material in first region | Coating in second region (coating particles) | Conductivity of electrolyte solution (S/cm) | Electrode plate |
|---|---|---|---|---|---|---|---|---|---|---|---|---|---|---|---|
| Embodiment 9 | 53 | 30 | 35 | 0.1 | 340 | 80 | 0.24 | 4.165 | 1.731 | 0.42 | 1 | LCO | Active material layer (LCO) + Insulation material layer (boehmite) | 11 | Positive electrode |
| Embodiment 10 | 53 | 30 | 35 | 0.01 | 340 | 100 | 0.29 | 4.165 | 2.1642 | 0.52 | 3.5 | LCO | Active material layer (LFP) | 10 | Positive electrode |
| Embodiment 11 | 53 | 30 | 35 | 0.01 | 340 | 100 | 0.29 | 4.165 | 2.1642 | 0.52 | 3.5 | Graphite | Active material layer (graphite) | 11 | Negative electrode |
| Embodiment 12 | 53 | 30 | 35 | 0.00001 | 340 | 160 | 0.47 | 4.165 | 3.4626 | 0.83 | 0.3 | LCO | Active material layer (LCO) | 11 | Positive electrode |
| Embodiment 13 | 53 | 30 | 35 | 0.00001 | 340 | 160 | 0.47 | 4.165 | 3.4626 | 0.83 | 0.3 | LCO | Insulation material layer (LCO) | 10 | Positive electrode |
| Embodiment 14 | 53 | 30 | 35 | 0.01 | 280 | 200 | 0.71 | 3.43 | 4.3283 | 1.26 | 3 | LCO | Active material layer (LCO) | 10 | Positive electrode |
| Embodiment 15 | 53 | 30 | 35 | 0.01 | 340 | 100 | 0.29 | 4.165 | 2.1642 | 0.52 | 0.3 | Graphite | Active material layer (graphite) | 11 | Negative electrode |

| Embodiment | $H_1$ (μm) | $H_2$ (μm) | $Dv_{99}$ | Area ratio between second region and first region | Area density of first region (g/m²) | Area density of second region (g/m²) | Area density ratio between second region and first region | Compaction density of first region (g/cc) | Compaction density of second region (g/cc) | Compaction density ratio between second region and first region | $W_1$ (mm) | Active material in first region | Coating in second region (coating particles) | Conductivity of electrolyte solution (S/cm) | Electrode plate |
|---|---|---|---|---|---|---|---|---|---|---|---|---|---|---|---|
| Embodiment 16 | 53 | 30 | 35 | 0.1 | 340 | 170 | 0.5 | 4.165 | 3.6791 | 0.88 | 5 | LCO | Active material layer (LCO) | 12 | Positive electrode |
| Comparative Embodiment 1 | 53 | 53 | 35 | / | 340 | / | / | 4.165 | / | / | / | LCO | / | 11 | Positive electrode |
| Comparative Embodiment 2 | 30 | 30 | 28 | / | 340 | / | / | 4.165 | / | / | / | Graphite | / | 11 | Negative electrode |

EP 4 283 701 A1

13

**Table 2 Performance test results**

| Embodiment | 1 Crate | $R_{normal}$-$R_{gentle}$ (mm$^{-1}$) | Nail penetration test pass rate | Compression test pass rate |
|---|---|---|---|---|
| Embodiment 1 | 95.8% | 800 | 9/10 | 9/10 |
| Embodiment 2 | 98% | 700 | 9/10 | 9/10 |
| Embodiment 3 | 99% | 1200 | 10/10 | 10/10 |
| Embodiment 4 | 99% | 1100 | 10/10 | 10/10 |
| Embodiment 5 | 99% | 1300 | 10/10 | 10/10 |
| Embodiment 6 | 99% | 750 | 9/10 | 9/10 |
| Embodiment 7 | 99% | 850 | 9/10 | 9/10 |
| Embodiment 8 | 98% | 2000 | 10/10 | 10/10 |
| Embodiment 9 | 99% | 2100 | 10/10 | 10/10 |
| Embodiment 10 | 99% | 1800 | 10/10 | 10/10 |
| Embodiment 11 | 99% | 1600 | 10/10 | 10/10 |
| Embodiment 12 | 99% | 1200 | 610 | 7/10 |
| Embodiment 13 | 98% | 1200 | 7/10 | 6/10 |
| Embodiment 14 | 98% | 600 | 5/10 | 6/10 |
| Embodiment 15 | 99% | 1500 | 7/10 | 5110 |
| Embodiment 16 | 93% | 1200 | 10/10 | 9/10 |
| Comparative Embodiment 1 | 99% | 0 | 0/10 | 0/10 |
| Comparative Embodiment 2 | 99% | 0 | 0/10 | 0/10 |

As can be seen, the batteries in Embodiments 1 to 16 all exhibit a relatively high 1 C rate. Especially, the batteries in Embodiments 1 to 11 can still achieve a very high pass rate even under the demanding test criteria of nail penetration and compression, and exhibit excellent safety performance and other performance indicators such as cycle performance and a relatively high energy density.

Although some embodiments of this application have been described above, this application is not limited to the foregoing embodiments. Any and all modifications, equivalent replacements, improvements, and the like made without departing from the spirit and principles of this application still fall within the protection scope of this application.

**Claims**

1. An electrode plate, **characterized in that**, the electrode plate comprises: a current collector and an active material layer located on at least one side of the current collector, the active material layer comprises a first region and a second region, the active material layer comprises active material particles; and the electrode plate satisfies a condition expressed by Formula (1):

$$H_2 < Dv_{99} < H_1 \qquad \text{Formula (1)},$$

wherein $Dv_{99}$ is a diameter of the active material particles corresponding to a point at which a cumulative volume percentage of measured particles reaches 99% of a total volume of all the active material particles in a volume-based particle size distribution curve viewed from a small-diameter side, $H_1$ is a thickness of the first region on a single side, and $H_2$ is a thickness of the second region on a single side of the current collector.

2. The electrode plate according to claim 1, **characterized in that**, the electrode plate comprises a jelly-roll electrode plate containing a bent section and a straight section, the bent section and the straight section form a jelly-roll structure, the first region is located in the straight section of the jelly-roll electrode plate, and the second region is located in the bent section of the jelly-roll electrode plate.

3. The electrode plate according to claim 1, **characterized in that**, the second region is located at a position around the first region.

4. The electrode plate according to claim 1, **characterized in that**, the electrode plate is at least one of a cathode or an anode.

5. The electrode plate according to claim 1, **characterized in that**, the $Dv_{99}$ ranges from 10 $\mu$m to 45 $\mu$m.

6. The electrode plate according to claim 1, **characterized in that**, a ratio between an area of the second region and an area of the first region is 0.1 to 0.0001.

7. The electrode plate according to claim 1, **characterized in that**, a ratio between an area density of the second region and an area density of the first region is 0.1 to 0.95.

8. The electrode plate according to claim 1, **characterized in that**, a ratio between a compaction density of the second region and a compaction density of the first region is 0.2 to 1.2.

9. The electrode plate according to claim 1, **characterized in that**, an active material in the second region is different from an active material in the first region.

10. The electrode plate according to claim 1, **characterized in that**, an insulation layer is provided on a surface of the second region.

11. The electrode plate according to claim 2, **characterized in that**, a width of the second region in a length direction of the electrode plate is Wi, and $W_1 \geq 2 \times H_1$.

12. The electrode plate according to claim 11, **characterized in that**, the $W_1$ ranges from 0.5 mm to 4 mm.

13. A secondary battery, **characterized in that**, the secondary battery comprises the electrode plate according to any one of claims 1 to 12.

14. The secondary battery according to claim 13, **characterized in that**, the secondary battery further comprises an electrolyte solution, and a conductivity of the electrolyte solution is greater than or equal to 7 mS/cm.

15. An electronic device, **characterized in that**, the electronic device comprises the secondary battery according to any one of claims 13 to 14.

EP 4 283 701 A1

FIG. 1

FIG. 2

FIG. 3

FIG. 4

FIG. 5

**EP 4 283 701 A1**

## INTERNATIONAL SEARCH REPORT

| | International application No. |
|---|---|
| | **PCT/CN2021/073261** |

**A. CLASSIFICATION OF SUBJECT MATTER**

H01M 4/13(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电极, 正极, 负极, 极片, 厚度, 第一, 第二, 不同, 粒度, 粒径, Dv99, electrode, positive, negative, thickness, first, second, different, particle, size, diameter

**C. DOCUMENTS CONSIDERED TO BE RELEVANT**

| Category* | Citation of document, with indication, where appropriate, of the relevant passages | Relevant to claim No. |
|---|---|---|
| Y | CN 111029527 A (NINGDE AMPEREX TECHNOLOGY LTD.) 17 April 2020 (2020-04-17) description paragraphs [0005]-[0033], [0047-0055], [0069], [0085]-[0101] | 1-15 |
| Y | CN 109841831 A (NINGDE AMPEREX TECHNOLOGY LTD.) 04 June 2019 (2019-06-04) description paragraphs [0003]-[0025], [0046]-[0063], [0084]-[0094] | 1-15 |
| A | CN 109037587 A (SOUND GROUP CO., LTD. et al.) 18 December 2018 (2018-12-18) entire document | 1-15 |
| A | CN 109004176 A (NINGDE AMPEREX TECHNOLOGY LTD.) 14 December 2018 (2018-12-14) entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2021** | **28 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/073261**

| Patent document cited in search report | | | Publication date (day/month/year) | Patent family member(s) | | | Publication date (day/month/year) |
|---|---|---|---|---|---|---|---|
| CN | 111029527 | A | 17 April 2020 | None | | | |
| CN | 109841831 | A | 04 June 2019 | CN | 112563491 | A | 26 March 2021 |
| | | | | WO | 2020187106 | A1 | 24 September 2020 |
| | | | | CN | 109841831 | B | 25 December 2020 |
| CN | 109037587 | A | 18 December 2018 | CN | 109037587 | B | 17 November 2020 |
| CN | 109004176 | A | 14 December 2018 | CN | 109004176 | B | 04 May 2021 |

Form PCT/ISA/210 (patent family annex) (January 2015)